# EUROPEAN PATENT APPLICATION

(11) **EP 2 763 444 A1**
(43) Date of publication of application: **06.08.2014**
(21) Application number: 13305116.9
(22) Date of filing: 01.02.2013
(51) Int. Cl.: H04W 12/08, B60R 25/24

(54) **A method and devices for authenticating**

(71) Applicant: Alcatel Lucent, 75007 Paris (FR)
(72) Inventor: Ballentin, Ralph, 74321 Stuttgart (DE); Loewel, Thomas, 704321 Stuttgart (DE); Moehlmann, Ulrich, 70435 Stuttgart (DE)
(74) Representative: Kröhnert, Michael

(57) **Abstract**

The invention concerns a radio base station (100) and a method adapted to receive a first identification of a terminal (160) to determine information about the distance between the terminal (160) and a predetermined position and to determine a trigger by evaluating if the first identification matches a predetermined second identification and the distance between the terminal (160) identified by the first identification and the predetermined position is less than a predetermined threshold or not.

## Description

### Field of the invention

The invention relates to a method and devices for authenticating in particular vehicle operation permission.

### Background

The entry or access to areas is restricted using authentication of individuals requesting access.

In buildings doors are for example locked with automatic locks, allowing access to individuals identifying themselves using tokens such as radio frequency identification badges.

Anti-theft device of vehicle for example use immobilizer systems that interact with the vehicle controller, particularly the engine controller to immobilize a vehicle in case of unauthorized access to the vehicle. An immobilizer is an electronic security device fitted to an automobile that prevents the engine from running unless the correct key (or other token) is present. Immobilizers for example comprise a sensor in the dashboard adapted to detect a unique radio frequency transmitted from a transmitter included for example in the vehicle's key. Upon detection of the unique frequency of the transmitter the immobilizer allows the vehicle to run.

These authentications require that individuals carry an extra device, the key or token, in order to use the car.

### Summary

The object of the invention is thus to simplify the authentication for a user,

The main idea of the invention is a radio base station adapted to receive a first identification of a terminal on a first data link, to determine information about the distance between the terminal and a predetermined position and to send a trigger on a second data link, wherein the trigger is sent only if the first identification matches a predetermined second identification and the distance between the terminal identified by the first identification and the predetermined position is less than a predetermined threshold. This way the terminal, e.g. mobile phone, is used to determine the authentication trigger.

Advantageously the base station is configured to have a predetermined coverage area matching the distance. This provides a reliable function of the authentication.

Advantageously the information about the distance is a third identification. This provides a simple reliable estimation of the distance.

Advantageously the radio base station is adapted to send the information about the distance and the first identification addressed to a server. This allows using small cheap radio base stations.

The invention concerns furthermore a vehicle comprising the device.

The invention also concerns a server for authenticating vehicle operation permission, adapted to receive a first identification and information about the distance between a terminal and a predetermined position and to send a trigger, wherein the trigger is sent only if the first identification matches a second identification and the distance between the terminal identified by the first identification and the predetermined position is less than a predetermined threshold.

The invention also concerns a method of authenticating vehicle operation permission, comprising receiving a first identification of a terminal on a first data link, determining information about the distance between the terminal and a prude-termined position and sending a trigger on a second data link, wherein the trigger is sent only if the first identification matches a second identification and the distance between the terminal identified by the first identification and the predetermined position is less than a predetermined threshold.

Further developments of the invention can be gathered from dependent claims and the following description.

### Brief description of the figures

In the following the invention will be explained further making reference to the attached drawings.
Fig. 1 schematically shows devices for authenticating vehicle operation permission.
Fig. 2 schematically shows a server for authenticating vehicle operation permission.
Fig. 3 schematically shows a system for authenticating vehicle operation permission.
Fig. 4 schematically shows a flow chart according to a method for authenticating vehicle operation permission.

### Description of the embodiments

In the following example the radio base station is used to trigger actions of a controlled device. As example the operation permission for the vehicle as controlled device is authenticated. When authenticated successfully the vehicle is triggered to operate or not. This allows immobilizing the vehicle for example as anti theft measure.

The authentication is in the example explained for triggering operation permission using the structure of a vehicle. However the invention relates to any other trigger or structure. This is easily seen using the example of opening or locking doors of the vehicle or a building structure by sending the respective open or close trigger depending on the authentication. Generally the trigger may comprise other information too. For example information to change a parameter of the controlled device may be included. This may be used for example to adjust a driver's seat in the vehicle or to trigger an automatic door opener to automatically open a door of a building for a certain time to allow touch free access.

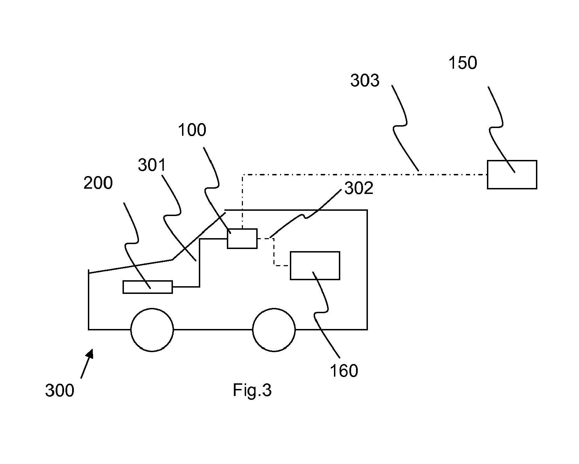

Figure 3 depicts a vehicle 300 having installed a radio base station 100. Figure 3 depicts furthermore a terminal 160 connectable to the radio base station 100 via a first data link. The terminal 160 comprises for example a first identification stored on the terminal 160. Preferably the terminal 160 is a mobile phone connectable to a mobile phone network via the radio base station 100. In this case the first identification may be the International Mobile Equipment Identity (well known as IMEI) or the subscriber identity in a mobile network stored on the subscriber identity module (well know as SIM card) currently in the terminal 160.

Furthermore a second identification matching the first identification is used to authenticate the terminal 160 when accessing the radio base station 100. For example the IMEI is stored as second identification, e.g. in a list of devices having access permission to the mobile phone network, and used to authenticate the mobile phone when accessing the mobile phone network.

Furthermore the radio base station 100 is connectable to a server 150 via another data link 303.

According to the example of Figure 3 the radio base station 100 is connected to a vehicle controller 200 via a second data link referred to as data bus 301 below.

Additionally the data bus 301 may connect the radio base station 100 to any other control unit of the vehicle 300. Alternatively a wire of the wiring harness of the vehicle 300 may be used as well.

The vehicle controller 200 is for example part of an immobilizer system adapted to stop the vehicle 300 upon receipt of a corresponding trigger from the radio base station 100 via the data bus 301 in case vehicle operation permission is not authenticated. The vehicle controller 200 may be any other type of control unit as well, e.g. an engine control unit, well known as ECU.

The data bus 301 is for example a controller area network bus, well known as CAN bus. Any other type of data bus may be used. For example a FlexRay bus may be used.

The terminal 160 and the radio base station 100 are operable to connect to each other via a data link 302. Preferably the terminal 160 and the radio base station 100 are adapted to connect via the data link 302 only when the terminal 160 is within a predetermined coverage area of the radio base station 100. To this end the radio base station 100 is for example configured to have a predetermined coverage area matching the distance between the terminal 160 and a predetermined position of radio base station 100.

As the radio base station 100 is mounted to the vehicle 300, this means that the predetermined position relative to the position of the vehicle 300 is fixed. As the terminal 160 is carried by a driver, the terminal 160 is at a certain position relative to the vehicle 300 at any time. Therefore the distance between the position of the radio base station 100 and the terminal 160 characterizes the distance between the driver and the vehicle 300. When the distance is less than a predetermined threshold, the terminal 160 is close to the vehicle 300 and hence the driver is close to the vehicle 300 as well.

According to this example the coverage area of the radio base station 100 is shaped to essentially follow the shape of the body of the vehicle 300 and to extend to the outside of the body of the vehicle 300 for a predetermined span. The predetermined span is for example 1 meter.

Alternatively the shape may be any other shape, e.g. circular or rectangular. The span may be more or less than 1 meter. When used to control access by triggering the door lock, preferably the span corresponds to the area around the vehicle 300 that the driver with the terminal 160 has to enter before the doors of the vehicle 300 shall open.

This means that the radio base station 100 is adapted to determine information about the distance between the terminal 160 and the predetermined position and to determine if the distance is less than the predetermined threshold at the same time by evaluating connection requests within the coverage area of the radio base station 100 by any terminal. As example, the receipt of a connection request from the terminal 160 is information that the distance between the terminal 160 and the predetermined position is below the predetermined threshold.

Optionally for the immobilizer system the radio base station 100 may be adapted to a coverage area corresponding to the inside of the vehicle 300. This means that the presence of the terminal 160 in the vehicle 300 is required.

In case of using the radio base station 100 in a building structure, e.g. to open a door, the coverage area may be shaped to fit a hallway or room, e.g. near the door.

Preferably the radio base station 100 is mounted so that removal of the radio base station 100 is made difficult or impossible without damaging modifications to the structure. In case of the vehicle 300, the radio base station 100 is for example mounted inside the vehicle 300.

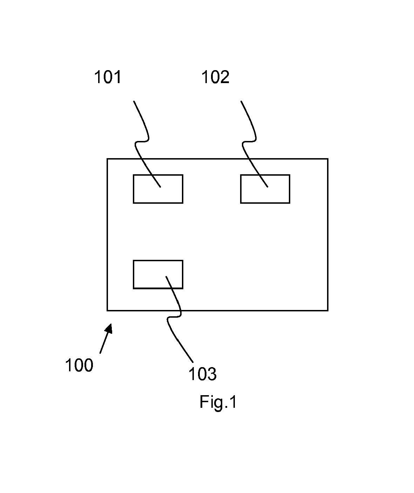

The radio base station 100 is depicted schematically in Figure 1. The radio base station 100 comprises an interface 101 adapted to access the data bus 301 of the vehicle 300. The interface 101 is for example a controller area network interface, well known as CAN interface. Any other type of data bus interface according to the vehicle 300 the radio base station 100 is to be installed in may be used. For example a FlexRay interface may be used. In case of operating door locks the interface may comprise a digital analog converter to send an electric signal to the door lock via a wire.

In an example the interface 101 is adapted to connect the radio base station 100 via the data bus 301 to the vehicle controller 200.

The radio base station 100 comprises storage 102, adapted to store a third identification. The third identification is for example a unique identification of the radio base station 100 or the vehicle 300 that the radio base station 100 is installed to. In case of a building structure the position of the radio base station 100 or the respective position in the building may be indicated by the third identification.

In an example the vehicle identification number, well known as VIN is stored as the third identification. This VIN is for example stored by the manufacturer when the radio base station 100 is mounted to the vehicle 300. Any other type of identification may be used, e.g. a name or number.

The storage 102 is for example an electronically erasable programmable read only memory, well known as EEPROM. The storage 102 may be any other type of storage, e.g. solid state disk or Flash memory. The storage 102 is preferably protected from unwanted write access, e.g. by its housing or by disabling the write pins in case of the EEPROM.

The radio base station 100 comprises a transceiver 103, operable to receive the first identification from the terminal 160 and to send information about the distance between the terminal 160 and the predetermined position addressed to the server 150.

For example the third identification is used as information about the distance. In this case the radio base station 100 is adapted to send the third identification and the first identification addressed to the server 150.

Furthermore the transceiver 103 is operable to receive a response from the server 150.

Furthermore the radio base station 100 is adapted to send a trigger on the second data link only if the first identification matches the second identification and the distance between the terminal identified by the first identification and the predetermined position is less than the predetermined threshold.

For example the response from the server 150 indicates whether the first identification and the second identification match or not. In this case the transceiver 103 is adapted to send the trigger upon receipt of a result indicating a match.

The transceiver 103 is adapted to send and receive via the data link 303 to the server 150 or the data link 302 to the terminal 160. The connection between the transceiver 103, the server 150 or the terminal 160 is for example according to the Long Term Evolution standard, well known as LTE. A Global System for Mobile Communications connection well known as GSM may be used as well. Any other wireless connection may be used. For example a wireless local area network (WLAN, 802.11n) connection may be used. The connection may also include at least partially a local area network (LAN) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using IP addresses or the well known uniform resource locators (URL), uniform resource identifiers (URI).

Optionally the transceiver 103 may be operable as wireless gateway for the terminal 160, e.g. according to the LTE standard.

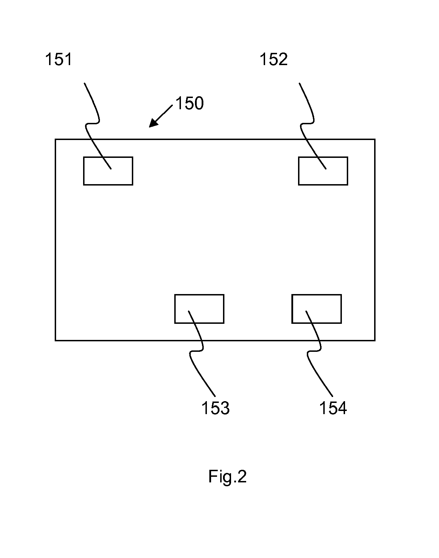

Figure 2 schematically shows the server 150. The server 150 comprises a processor 151 and a transceiver 152 adapted to receive the first identification and the information about the distance. The first identification is used to identify the terminal 160, while the information about the distance is used to determine if the terminal 160 is near the vehicle 300.

To that end the processor 151 is adapted to access a data base 154 to determine whether the first identification matches one of a plurality of second identifications previously stored in the data base 154. This means in the example of IMEI the terminal 160 is in the list of devices having access to the mobile phone network.

To determine that the terminal 160 is within the required distance from the vehicle 300, the information about the distance is used.

The information about the distance may be an estimation of the real distance, e.g. from wireless triangulation, GPS coordinates of the respective devices or considering signal strength. In this case the data base 154 comprises the predetermined threshold value. In this case the processor 151 is adapted to confirm a match of the first identification and the second identification only in case the distance is less than the predetermined threshold, e.g. 1 meter.

Alternatively the third identification is used as information about the distance. In this case the third identification of the radio base station 100 being the current access point for the terminal 160 is used as indication for the distance.

In this case the processor 151 is adapted to determine whether the distance between the terminal 160 identified by the first identification and the predetermined position is less than the predetermined threshold by looking up if the third identification is assigned to the second identification matching the first identification received. The assignment is in this case previously stored in the data base 154. This means in the example of the VIN and IMEI, that a mapping of IMEI and VIN is stored in the data base 154. This corresponds to storage of the IMEI of the terminals 160 of all potential drivers of the vehicle 300, wherein the vehicle 300 is identified by the VEIN sent as third identification. This information may be previously stored in the data base 154 on behalf of or by an owner of the vehicle 300.

The data base 154 may be part of the server 151 or external.

Furthermore the transceiver 152 is adapted to send the response addressed to the radio base station 100.

A method for authenticating vehicle operation permission is described below using the example of a person having as terminal 160 a mobile phone with an IMEI approaching the vehicle 300 having a VIN as third identification stored in the radio base station 100 mounted to the vehicle 300. In this example the mobile phone logs into the mobile phone network via the radio base station 100 when the terminal 160 is within the coverage area of the radio base station 100.

During the login, the radio base station 100 receives the IMEI from the terminal 160 and reads the VIN from storage 102. Then the IMEI and the VIN are transmitted as first identification and third identification via the transceiver 103 addressed to the server 150.

The server 150 receives the IMEI and VEIN via the transceiver 152 and accesses the data base 154 via the processor 151 to find the pair of matching IMEI and VIN for the received IMEI and VIN. If the matching pair is found, the server 150 sends the response via the transceiver 152 addressed to the radio base station 100. The response indicates in the example a successful authentication of the vehicle operation permission. Upon receipt of this response the trigger is sent by the radio base station via the first data link.

The response may include additional information. This additional information may indicate i.e. if the person the IMEI is linked to a valid driver license or not. To that end the data base 154 may comprise information regarding the validity of the driver license stored and assigned to the IMEI of the person.

In this case the server 150 may be adapted to look up the additional information in the data base 154 and the radio base station 100 may be adapted to process the additional information and send the additional information via the data bus of the vehicle to the appropriate car control unit. For example the immobilizer system is this way used to stop the vehicle 300 in case the person identified has no valid driver license. A respective trigger may be displayed in the dashboard display. This may be used to solve legal aspects especially for rental car fleets. To that end the data base 154 is for example programmed with the required data. Alternatively the server 150 may be adapted to request validity information from the external data base 154 via a separate interface and data link.

Furthermore the response may indicate i.e. individual vehicle settings for the person the IMEI is linked to. For example comfort functions like preferred radio station or dynamic adaptive cruise control settings are stored in the data base and send in the response.

In this case the radio base station 100 may be adapted to process the additional information and send the additional information via the data bus 301 of the vehicle 300 to the appropriate car control unit. This allows initiating the vehicle configuration suitable to the identified person.

The interface 101 is adapted to send a trigger on the data bus 301 depending on the result received by the transceiver 103. The trigger is sent for example according to the CAN protocol.

The trigger is for example a command to the immobilizer system to activate or deactivate the engine of the vehicle 200. The trigger may be any other command to trigger immobilization of the vehicle.

The transceiver 103 may be operable to receive additional information as response, and determine the trigger depending on the additional information.

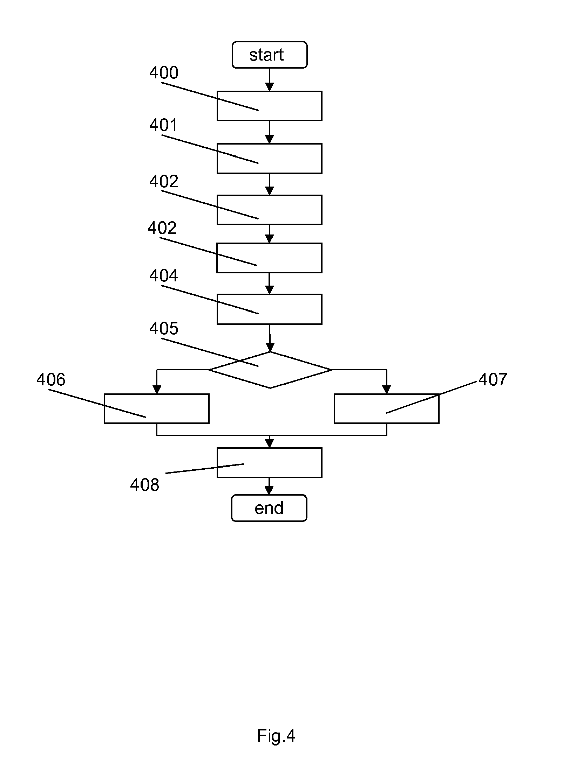

Figure 4 schematically shows flow chart according to an exemplary method for authenticating vehicle operation permission.

The method starts in the example any time a login of the terminal 160, e.g. the mobile phone, into the radio base station 100, e.g. a small cell, mounted to the vehicle 300 is detected.

After the start a step 400 is executed.

In step 400 the third identification is read from storage 102.

Afterwards a step 401 is executed.

In step 401, a request to receive the first identification is sent. Afterwards a step 402 is executed.

In step 402 the first identification is received. The step 402 may include a routine to wait for the response to the request of step 401.

Afterwards a step 403 is executed.

In step 403 the third identification and the first identification are sent addressed to the server 150. Afterwards a step 404 is executed.

In step 404 the response including the result of the authentication of the vehicle operation permission is received. Step 404 may include a routine to wait for the response.

Afterwards a step 405 is executed.

In step 405 the response is evaluated. In case the response indicates that the first identification matches the predetermined second identification and the distance between the terminal 160 identified by the first identification and the predetermined position is less than the predetermined threshold, a step 406 is executed. Otherwise a step 407 is executed.

In step 406, the trigger instructing the immobilizer of the vehicle 300 to allow operation of the vehicle 300 is determined. Afterwards a step 408 is executed.

In step 407, the trigger instructing the immobilizer of the vehicle 300 to stop the operation of the vehicle is determined. Afterwards the step 408 is executed.

In step 408, the trigger is sent on a data bus.

Afterwards the method ends.

The order of the aforementioned steps may be different. Some of the steps may be repeated while other may be omitted during the repetition.

The method may comprise an additional step receiving additional information as response, and determine the trigger depending on the additional information. For example information about the validity of the driver license may be received and processed to send a trigger instructing the immobilizer to stop the vehicle in case the license is invalid or to display a respective trigger in the display of the dashboard.

Likewise the additional information received may include parameters for functions of the vehicle 300. In this case the trigger may be determined to instruct the respective control units of the vehicle 300 to adjust the parameters accordingly.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A radio base station (100) adapted to receive (402) a first identification of a terminal (160) to determine (400) information about the distance between the terminal (160) and a predetermined position and to determine a trigger by evaluating (405, 406, 407) if the first identification matches a predetermined second identification and the distance between the terminal (160) identified by the first identification and the predetermined position is less than a predetermined threshold or not.

2. The base station according to claim 1, configured to have a predetermined coverage area matching the distance.

3. The radio base station according to claim 1 or 2, wherein the information about the distance is a third identification.

4. The radio base station according to any of claims 1 to 3, adapted to send (403) the information about the distance and the first identification addressed to a server.

5. A vehicle (300) comprising the radio base station (100) according to any of the aforementioned claims.

6. A server (150), adapted to receive a first identification and information about the distance between a terminal (160) and a predetermined position and to determine a trigger by evaluating (405, 406, 407) if the first identification matches a predetermined second identification and the distance between the terminal (160) identified by the first identification and the predetermined position is less than a predetermined threshold or not.

7. A method comprising receiving (402) a first identification of a terminal (160) on a first data link, determining (400) information about the distance between the terminal (160) and a predetermined position and determining a trigger by evaluating (405, 406, 407) if the first identification matches a predetermined second identification and the distance between the terminal (160) identified by the first identification and the predetermined position is less than a predetermined threshold or not.

8. The method according to claim 7, wherein the information about the distance is a predetermined identification of a radio base station (100).

9. The method according to claim 7 or 8, comprising sending (403) of the information about the distance and the first identification addressed to a server (150).

10. The method according to any of claims 7 to 9, comprising sending (401) a request for the first identification addressed to the terminal (160).
